# DEMANDE DE BREVET EUROPEEN

(11) **EP 1 457 687 A1**
(43) Date de publication de la demande: **15.09.2004**
(21) Numéro de dépôt: 03290617.4
(22) Date de dépôt: 13.03.2003
(51) Int. Cl.: F16B 12/02, F16B 12/46, A47B 47/04

(54) **Pièces pour assemblage et montage du mobilier contemporain des stands, des rayons**

(71) Demandeur: Ndzana Alima, Joseph, 80080 Amiens (FR); Lonak, Jean, 80470 Saveuse (FR)
(72) Inventeur: Ndzana Alima, Joseph, 80080 Amiens (FR); Lonak, Jean, 80470 Saveuse (FR)

(57) **Abrégé**

L'invention concerne un ensemble de pièces permettant de monter ou d'assembler le mobilier contemporain, les rayons, les stands, les agrandir sans les démonter ni les vider, en utilisant le moins de vis possible, sans assistance et avec un gain de temps considérable.

Les pièces comportent des compartiments (3) et (6) conçues et fabriquées aux dimensions normalisées (épaisseurs et largeurs) des planches, poutres et autres parties. Les compartiments sont constitués par des parois (1), (4), (5) ou plus selon des pièces particulières.

Les pièces selon l'invention sont particulièrement destinées au montage, à l'assemblage et à l'agrandissement du mobilier contemporain, des stands, des rayons.

## Description

La présente invention concerne un ensemble de pièces pour assembler et monter le mobilier contemporain, les stands, les rayons. Ces pièces permettent aussi de créer du mobilier contemporain, stands et rayons tout à fait originaux. Elles permettent également d'agrandir le mobilier contemporain, les stands et les rayons sans les démonter ou vider.

L'assemblage et le montage du mobilier contemporain et des stands sont traditionnellement effectués à l'aide d'un grand nombre de vis et d'écrous ou de la colle, ce qui réduit considérablement la durée de vie du mobilier contemporain ou stand, car le mobilier contemporain ou les stands deviennent inutilisables suite aux démontages et montages consécutifs à un ou plusieurs déménagements. En outre, le montage et l'assemblage traditionnels du mobilier contemporain ou des stands requièrent un temps considérablement long, un nombre élevé de vis et d'écrous et autant de trous à percer, avec d'autres pièces dont la reconnaissance et la manipulation ne sont pas toujours évidentes. De plus, traditionnellement, l'assemblage, le montage et le démontage d'un mobilier contemporain ou d'un stand requièrent plus d'une personne.

L'ensemble des pièces, selon l'invention, permet de remédier à ces divers inconvénients. Les pièces comportent des compartiments dans lesquels seront encastrées les planches ou les montants. Les dimensions, épaisseurs, largeurs de ces compartiments sont conçues de telle sorte que les planches ou les montants, selon les normes de chaque pays, puissent être encastrées dans la pièce avec précision, exactitude et facilité. Le principe fondamental de l'invention est de pouvoir monter, assembler les meubles tout simplement en encastrant ou en glissant les extrémités des planches, des montants ou autres parties les constituant dans les pièces préalablement conçues et fabriquées aux dimensions, épaisseurs et largeurs normalisées et en vigueur de ces planches, montants et autres parties. Ainsi dans une seule pièce et selon la pièce, l'utilisateur peut encastrer deux planches, une verticale et une autre horizontale, formant ainsi un angle droit fixe ; et deux vis, une sur le côté vertical et une autre du côté horizontal viendront renforcer la stabilité de l'ensemble. Selon des modes particuliers de réalisation, les pièces sont conçues d'après divers profilés tels L,U, C,V et d'autres, adoptant le même principe d'encastrement des planches, montants ou autres parties.

Le rebord pourvu d'un trou pour y glisser une vis peut adopter diverses formes géométriques telles que l'arc de cercle, le trapèze, le triangle, des formes sinusoïdales et même des formes fantaisistes pour des raisons esthétiques.

Pour les planches de petite largeur, les pièces peuvent être semi-ouvertes sur une face.

Pour les planches de grande largeur, les pièces peuvent avoir plus d'un trou par côté pour les vis, pour assurer une plus grande stabilité.

Les pièces peuvent être conçues en angle droit ou en un autre angle que l'angle droit pour s'adapter à des configurations particulières.

Les dessins annexés illustrent l'invention.

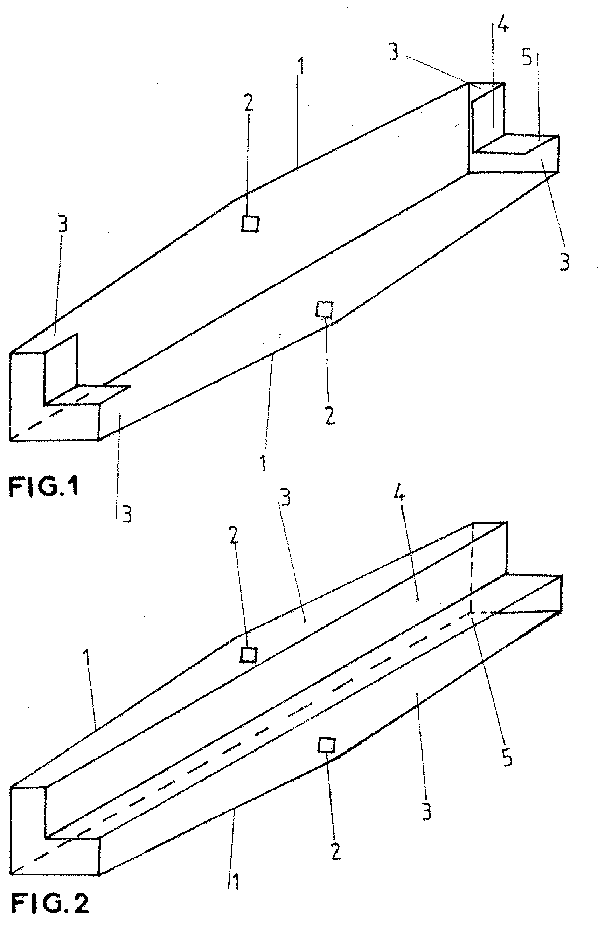

La figure 1 représente une pièce à face ouverte, adaptée aux planches de petite largeur.
La figure 2 représente une variante adaptée aux planches de grande largeur permettant d'encastrer deux planches en angle droit.

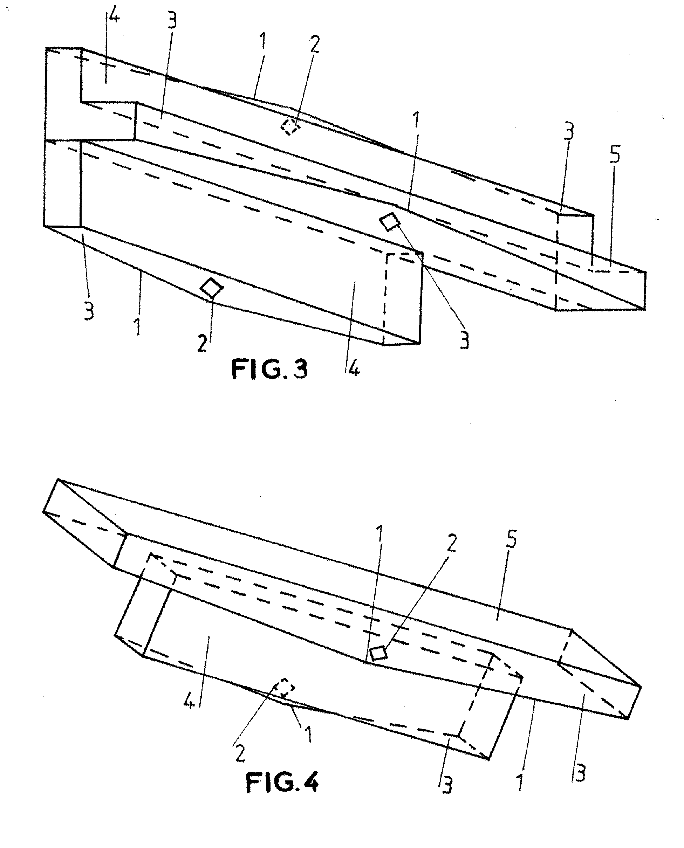

La figure 3 représente une pièce permettant d'adapter trois planches.
La figure 4 représente une pièce adaptable aux meubles avec un ou des rebords.
La figure 5 représente une pièce permettant d'adapter trois planches en deux angles droits distincts.

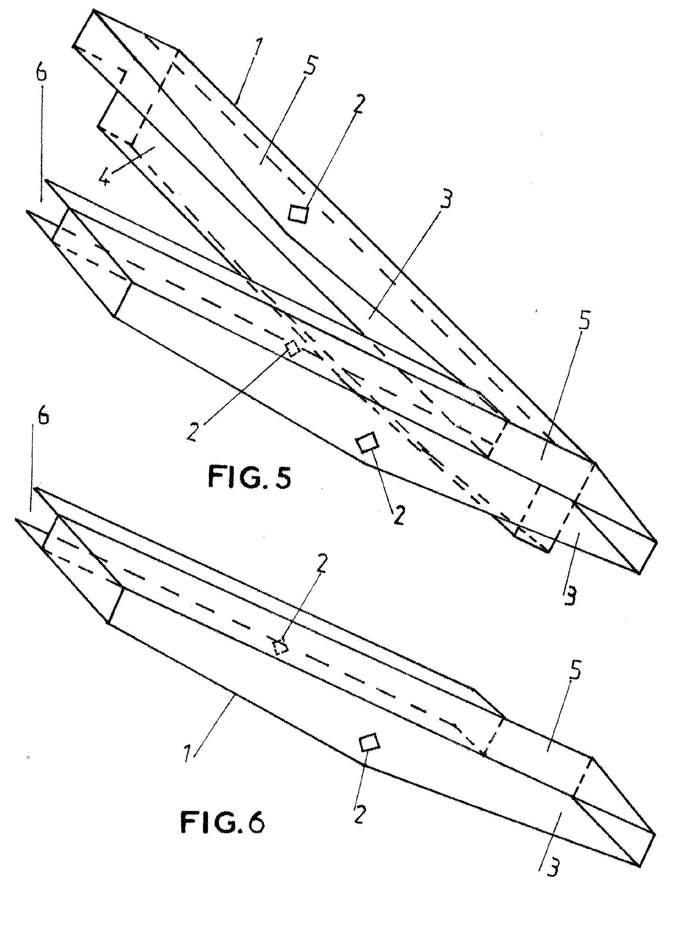

La figure 6 représente une pièce qui permet d'encastrer une planche verticalement à une autre horizontalement.

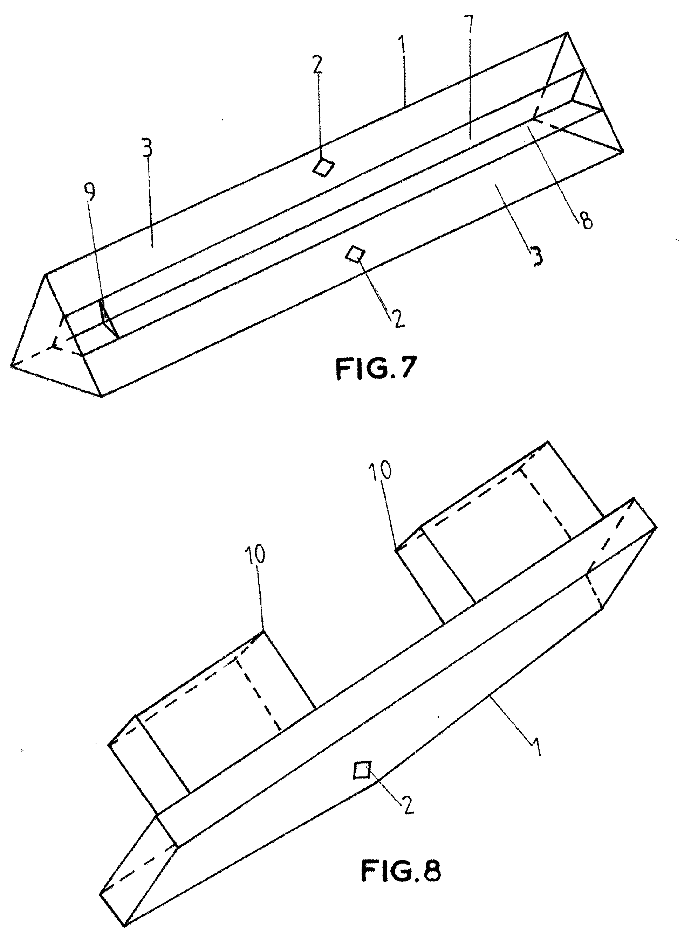

La figure 7 représente une pièce particulièrement adaptable à la partie inférieure de l'arrière des meubles.
La figure 8 représente une pièce conçue pour des meubles spéciaux tels que le meuble de cuisine (exemple non limitatif).

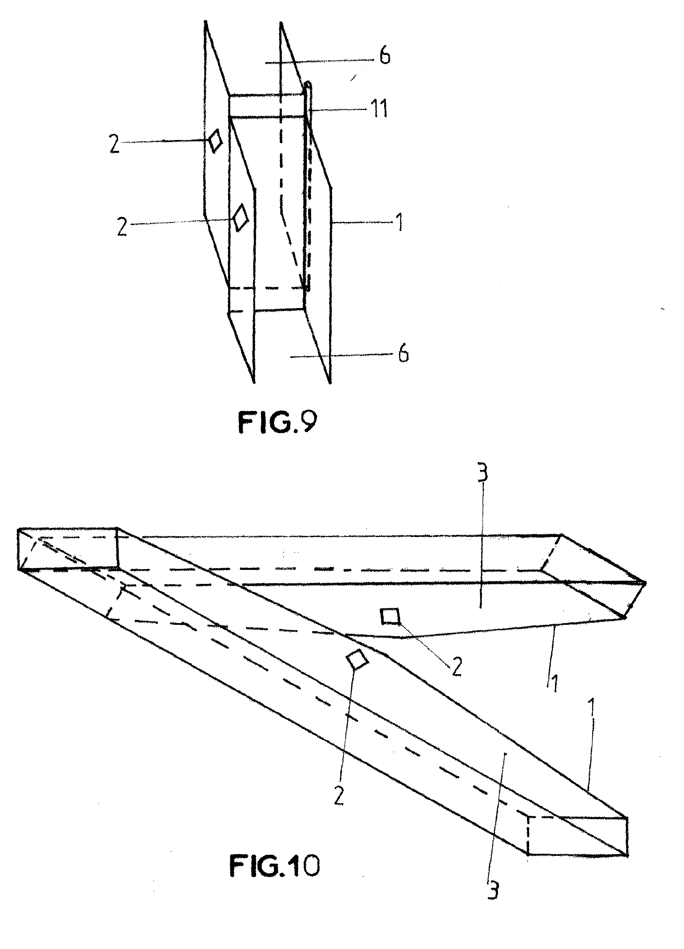

La figure 9 représente une pièce permettant de fixer les portes des meubles qui en comportent.
La figure 10 représente une pièce en angle aigu adaptable à des configurations particulières telles que les greniers (exemple non limitatif).

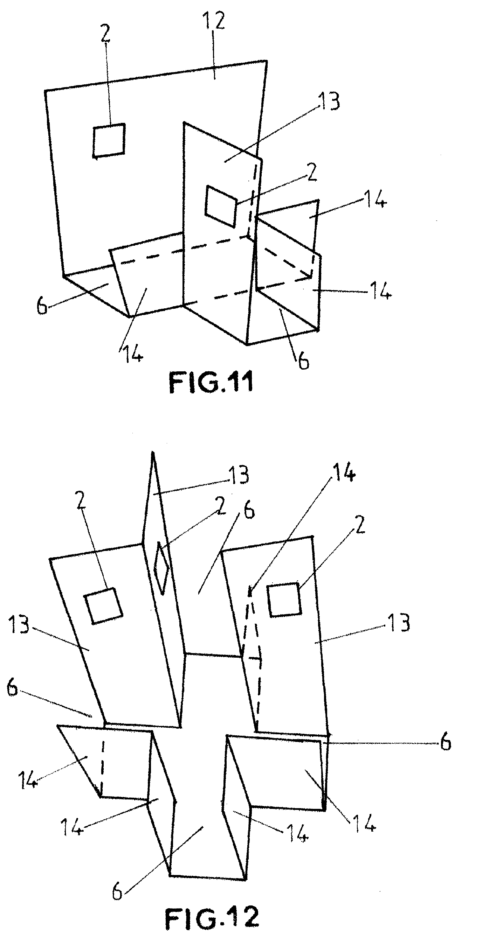

La figure 11 représente une pièce qui permet de fixer une planche intermédiaire à une planche latérale, médiane, supérieure ou inférieure. L'encastrement s'effectue en angle droit, de façon horizontale ou verticale.
La figure 12 représente une pièce permettant d'encastrer et de fixer trois ou quatre planches intermédiaires à des intersections de planches. Elle sert également de base ou de point de départ pour l'élargissement ou le prolongement de certains meubles, sans avoir à les démonter ou même à les vider.

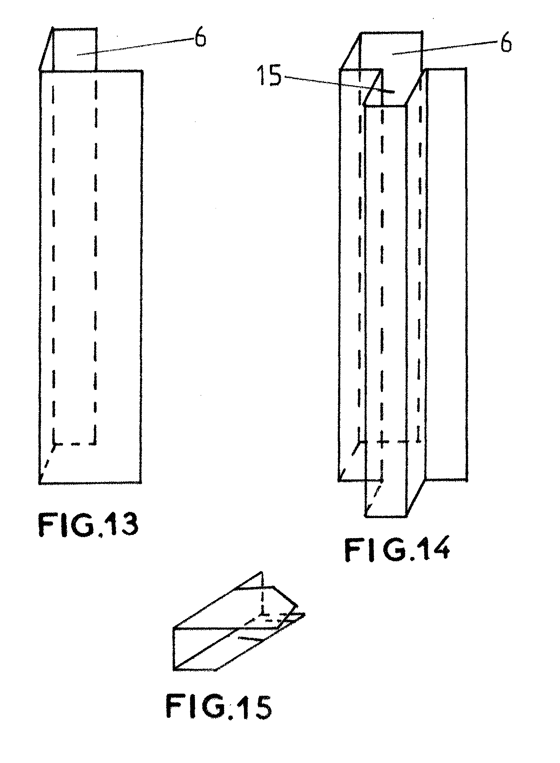

La figure 13 représente une pièce particulièrement adaptée à l'arrière des meubles pour fixer la planche arrière de certains meubles.
La figure 14 représente une pièce particulièrement adaptée également à l'arrière des meubles pour fixer la planche arrière de certains meubles sans avoir recours aux vis.

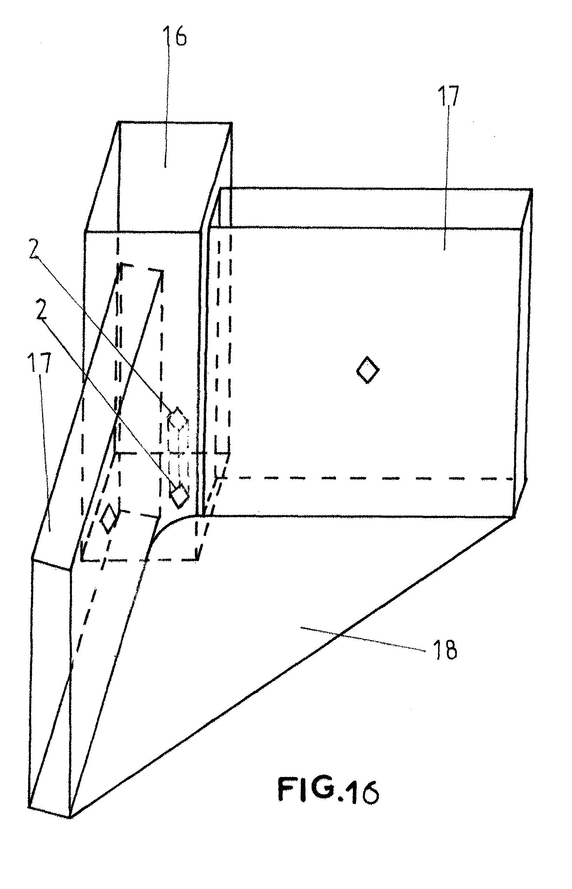

La figure 15 représente une pièce qui permet de plaquer la pièce représentée par la figure 14 à la planche de manière à ce que celle-ci reste fixe et immobile.
La figure 16 représente une pièce particulièrement adaptée aux meubles tels que les lits ou les tables (exemples non limitatifs).

En référence à ces dessins, les pièces inventées comportent, selon la pièce, des parois avec rebord à formes géométriques modulables (1), ayant un trou (2) prévu pour glisser une vis. Une planche sera encastrée dans le compartiment (3). Les parois (4) et (5) permettent de compléter le compartiment encastrement et de maintenir la planche fixe en position horizontale ou verticale. Une autre pièce est munie d'un compartiment à extrémités ouvertes (6). Les parois (7) et (8) exercent la même fonction que les parois (4) et (5) à ceci près qu'elles sont de dimensions réduites et adaptées aux pièces destinées à l'arrière des meubles comportant une cale (9). Le compartiment (10) est de dimensions réduites constituant une autre pièce. Une charnière (11) relie les deux compartiments constituant la pièce pour encastrer et fixer les portes. Les parois (12), (13) et (14) constituent des éléments de stabilité et d'encastrement dans les pièces où elles sont présentes ; un clip vient s'accrocher sur la partie (15) réservée à cet effet pour coincer la pièce. Le compartiment (16) est conçue pour l'encastrement des montants pour lits ou tables, tandis que le compartiment (17) permet l'encastrement des traverses pour lits et des planches pour tables.

La paroi (18) est conçue pour supporter le sommier ou, lorsque la pièce est renversée suivant un angle de 180° sur l'axe vertical, les tables. L'exemple des tables et lits pour l'application de cette pièce est non limitatif.

Les parois (12), (13) et (14) peuvent adopter la forme de divers figures géométriques. Il en est de même pour le compartiment (16) qui peut être cylindrique, triangulaire, trapézoïdal, etc.

Le dimensionnement des pièces est réalisé de sorte que la stabilité, la solidité, l'équilibre les meubles, étagères, stands, rayons soient toujours garantis. De même le matériau choisi pour fabriquer les pièces doit toujours assurer les exigences de stabilité, solidité et équilibre. Chaque pièce illustrée peut être déclinée en plusieurs variantes, chacune de ces variantes respectant et adoptant le même principe de base que celui illustré ici.

Le dispositif constituant l'invention est particulièrement adapté au montage et assemblage des meubles, étagères, rayons et stands.

## Revendications

1. Ensemble de pièces pour monter, assembler, agrandir le mobilier contemporain, les stands, les rayons. Les pièces sont **caractérisées en ce qu'**elles comportent des compartiments (3) et (6) prévus pour l'encastrement des planches, des montants et autres parties.

2. Les parois des pièces (1), (4), (5), (7), (8), (12), (13), (14), selon la revendication précédente, sont **caractérisées en ce qu'**elles assurent la stabilité et le support des pièces dans lesquelles elles sont présentes, ainsi que celles des planches, montants ou autres parties. La paroi à rebord (1) pourvu d'un trou (2) permet d'y glisser une vis pour renforcer la stabilité de l'ensemble lorsque cela est nécessaire.

3. Les pièces selon l'une des quelconques revendications précédentes sont **caractérisées en ce qu'**elles peuvent adopter différents angles : angle droit ou autre angle permettant l'adaptation à des configurations particulières.
